Europäisches Patentamt

**European Patent Office**

**Office européen des brevets**

(19)

(11) Publication number: **0 024 171**
B1

(12) **EUROPEAN PATENT SPECIFICATION**

(45) Date of publication of patent specification: **16.11.83**

(51) Int. Cl.³: **A 22 C 21/00**

(21) Application number: **80302715.0**

(22) Date of filing: **07.08.80**

(54) **Poultry abattoir apparatus.**

(30) Priority: **08.08.79 AU 9935/79**

(43) Date of publication of application:
**25.02.81 Bulletin 81/8**

(45) Publication of the grant of the patent:
**16.11.83 Bulletin 83/46**

(84) Designated Contracting States:
**AT BE CH DE FR GB IT LI LU NL SE**

(56) References cited:
**FR - A - 700 434**
**GB - A - 721 419**
**US - A - 1 637 096**
**US - A - 2 855 624**
**US - A - 3 777 886**

**FOOD ENGINEERING, vol. 27, October 1955
NEW YORK (US) R. BERNICK: "Zips Feathers
from 7500 Birds per Hour" pages 107-224**

(73) Proprietor: **James Winstone Ryan**
**166 Catherine Street**
**Invercargill (NZ)**

(72) Inventor: **James Winstone Ryan**
**166 Catherine Street**
**Invercargill (NZ)**

(74) Representative: **Day, Jeremy John et al,**
**REDDIE & GROSE 16 Theobalds Road**
**London, WC1X 8PL (GB)**

Courier Press, Leamington Spa, England.

Poultry abattoir apparatus

This invention relates to poultry abattoir apparatus.

Mechanisation of poultry abattoirs is well known with sophisticated equipment designed to handle many thousands of birds each day. See for example an article by Robert Bernick in *Food Engineering* Vol. 27, October 1955, pages 107 and 224 entitled "Zips Feathers from 7500 Birds per Hour", which describes an overhead conveyor system having an improved picker unit. There are however many situations where the number of birds available for slaughter does not justify installation of automatic handling equipment. However even with smaller numbers of birds any automation which can be introduced will be labour saving, allowing for a more efficient operation of such small type abattoir installations.

United States Patent US—A—1,637,096 issued July 26, 1927 entitled "Poultry-Dipping Mechanism" describes a dipping unit for dipping birds into a hot bath. The birds are supported each at the end of a respective arm and the arms are rotated from a first table for receiving undipped birds, through the bath, to a second table for receiving the dipped birds. The arms are lowered to immerse the birds automatically by means of a cam track. This apparatus assists only to a very small extent in mechanising the operation of a poultry abattoir.

The present invention provides improved poultry abattoir apparatus as defined in the appended claims, to which reference should now be made. The apparatus is particularly advantageous in enabling some automation to be introduced into abattoir equipment designed for relatively low numbers of through-put.

One preferred form of the invention will now be described with reference to the accompanying drawings in which:

Figure 1 is a pictorial view of apparatus according to the present invention,

Figure 2 is a partly diagrammatic plan view of the apparatus showing the relative locations of stations,

Figure 3 is a detailed view showing one type of advancing drive,

Figure 4 is a further detailed view showing the plucking station,

Figure 5 is a section elevation through a scalder used in the apparatus, and

Figure 6 is a further sectional view at right angles to the view as illustrated in figure 5.

Poultry abattoir apparatus 1 comprises a central support provided in the illustrated form of the invention by a column or upstand 2 from which are rotatably supported a plurality of radial arms 3. It will be appreciated that the column could be replaced by a hanger for example suspended from a suitable support structure.

In the illustrated form of the apparatus six equally spaced radial arms 3 are provided. It would also be possible to design the apparatus with five equally spaced arms.

Each arm 3 has dependent from the end thereof a chicken carrying carousel 4 so that each such carousel is located an equal distance from the central support point. Once again the construction of the carousel can be varied both in detail of mechanical design and also in size. The carousel may be as small as is necessary to hold five birds or as large as is necessary to hold 20. A preferred range is 15 to 20 birds. Larger carousels could be designed but will begin to exceed the numbers of birds which are suited for processing by this type of apparatus.

The apparatus as illustrated in the drawing depicts a larger type of the carousel having a 20 bird holding capacity. The carousel is preferably made up of the wheel type assembly, for example cast from aluminium or other suitable metal with spokes radiating to a rim from which are suspended fixed bird carrying shackles 5. Thus each bird carrying carousel 4 is rotatably supported on the end 6 of its respective radial arm 3.

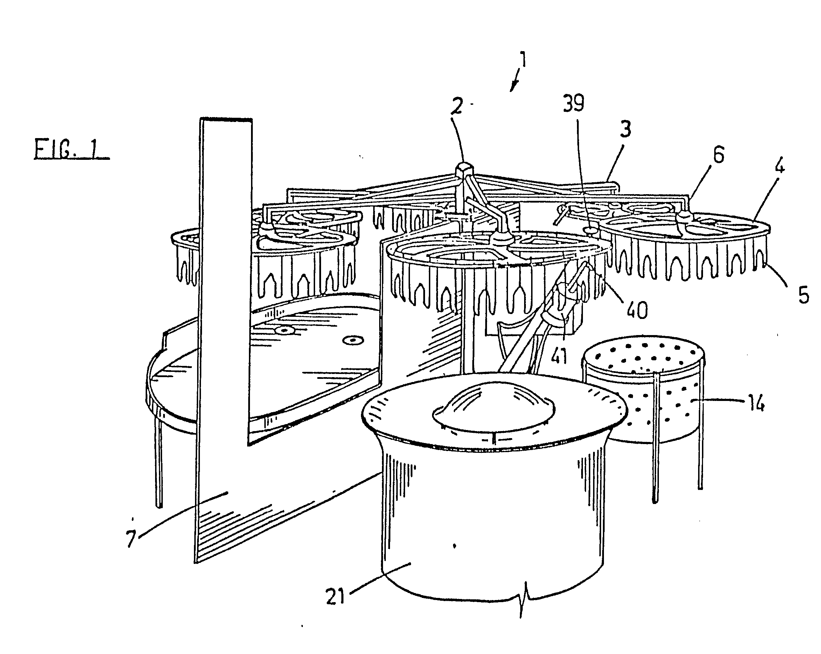

A dividing baffle or wall 7 is located essentially separating the apparatus in half. This dividing baffle is a hygiene requirement demarking a separation between the various operating stages in the process as will be detailed herebelow. It clearly is not an essential feature of the invention and as will be apparent from the drawing in figure 1 the baffle must include wide openings to allow for the movement of the carousel therethrough during rotation about the central support 2.

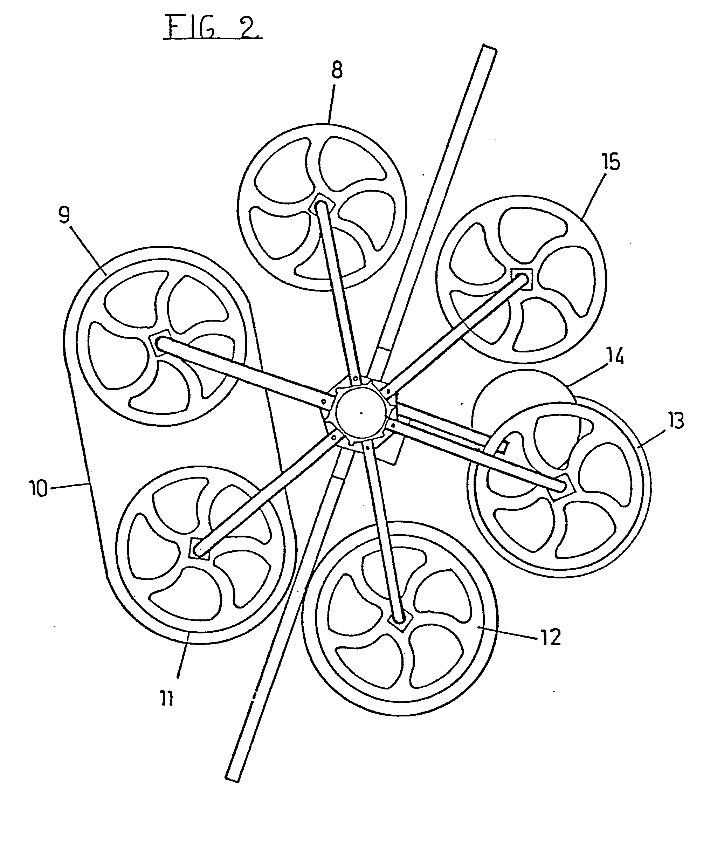

With reference to figure 2 the various operating stations in the process will now be identified. The carousel at position 8 would be normally used for hanging birds removed from a crate or other normal receptacle so that they are suspended while still alive in the inverted position with their legs engaged in the bird carrying shackles 5. In this position the birds normally quickly assume a relaxed state and may be advanced to the next station 9 which is the killing station. A single operator would be able to remove the birds from the crate, load the carousel at 8 and also kill the birds once the carousel has been advanced to station 9. Killing is normally done by cutting the main vein in the neck of the bird and allowing the bird to bleed to death. Thus a bleeding tray 10 is located beneath the killing station 9 and what has been identified as the bleeding station 11 which is the next step of advancement as the carousel moves through the various operating stations.

Station 12 is the scalding station where the birds that have been allowed to bleed are immersed in scalding water for the appropriate treatment time. The scalding apparatus designed for the present apparatus will be described in greater detail herebelow.

The birds are then advanced to station 13 which is identified as the plucking station. The birds that have been scalded are removed from the shackle and dropped into a plucker 14.

Again this aspect of the operation will be described in greater detail herebelow.

The final station or sixth position 15 is essentially a spare station although it can be used to remove legs where a cut-off saw is in action at the plucking station. It may also be used as a cleaning station if it was felt hygiene required the carousel to be cleaned prior to the next cycle through the stations as just identified.

As will be clear from the above description it is necessary to advance the carousels in a step by step sequence through the operating stations. It is also important to ensure the carousel is correctly located and held in place at the station during treatment. In the simplest form such rotation may be achieved by a man releasing a mechanical lock and advancing all of the carousels one position, prior to re-engaging the mechanical lock so that the carousels will remain in that position until the lock is released and the next advancement step taken.

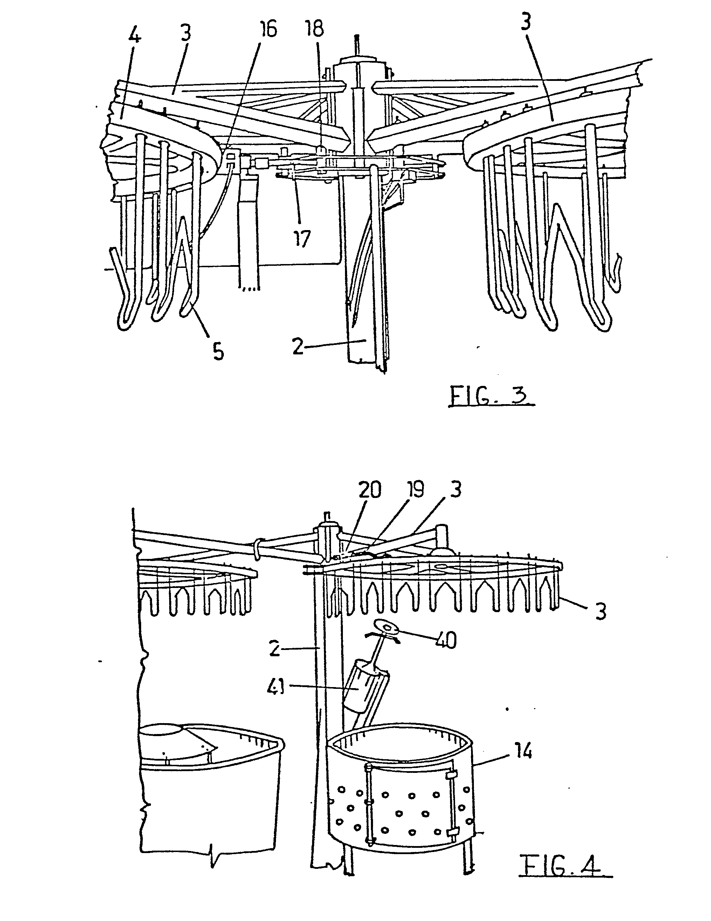

There is clearly advantage in having an automated step drive incorporated particularly with the larger type of apparatus as illustrated. Such a step type drive is detailed in figure 3 where a pneumatic ram 16 has the driving head 17 designed to engage with stops 18 appropriately spaced about the rotating head supported on the column 2. Actuation of the ram 16 is controlled through an appropriate control circuit to cause the head 17 to engage with a stop 18 and advance the head so that the carousels move one step around the processing path. As mentioned a lock is introduced and this can be provided by a mechanical catch 19 into which an arm 3 in the illustration shown in figure 4 at the plucking station will engage. A lead in or guide bar 20 directs the arm 3 into the catch 19 so that it is firmly held in place. This whole assembly can be released for example by a small pneumatic cylinder pulling the arm down when the operating cycle is at a stage which will allow for the next movement of the carousels through the processing steps. It will be apparent that other type of drive means may be used and other types of locking mechanism could also be included.

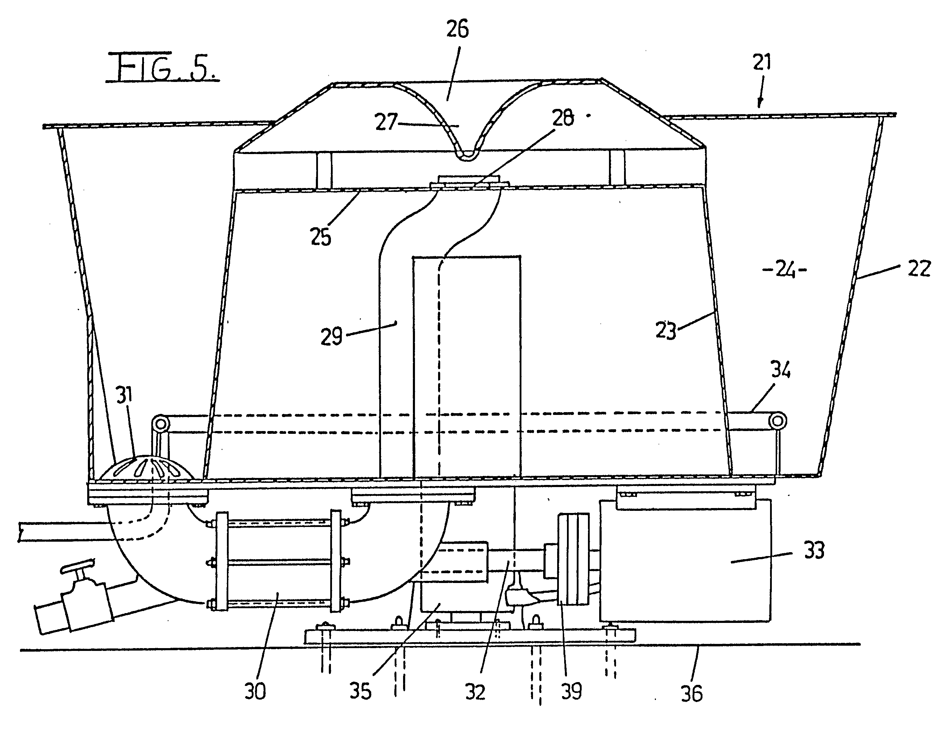

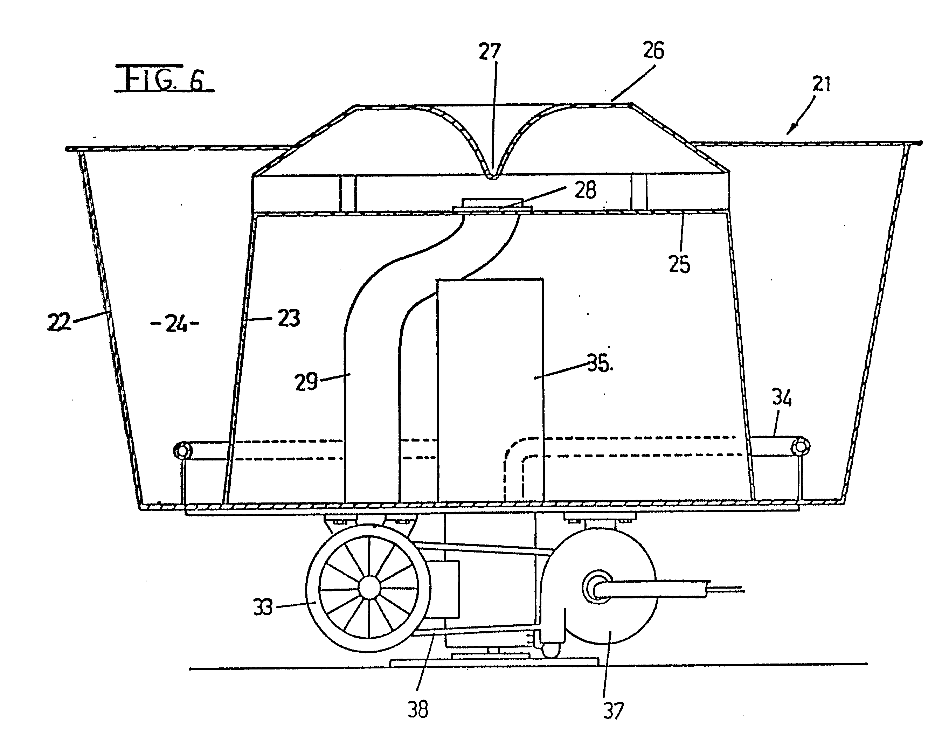

The scalder 21 forms an important part of the apparatus and this is illustrated in more detail in figures 5 and 6 of the accompanying drawings. The scalder 21 comprises an outer cylindrical container 22 having a central section 23 together defining an annular chamber 24 in which the birds to be scalded can be immersed in scalding water. The central section 23 has a top 25 so that any water falling thereon must be directed into the annular chamber 24. A deflector head 26 is located above the base 25 and has a downwardly directed cone section 27 located immediately above a water discharge 28. This water discharge or inlet point is connected via a large diameter pipe 29 and pump 30 to a water collection point 31 in the base of the receptacle 24. The pump 30 is driven through an appropriate drive shaft 32 by a motor 33. Thus in use when the pump is operating the flow of water is caused to be drawn in at 31 and discharged at 28 to be divided by the cone 27 and distributed substantially equally about the annular chamber 24 delivering a downwardly directed flow of water into the chamber 24.

In the base of the chamber 24 is located a pipe 34 which allows for the injection of steam into the water to control the temperature at which the water in the chamber 24 is maintained so that by use of appropriate control equipment the optimum scalding temperature for the birds being processed can be maintained.

The whole of the above described apparatus is supported on a hydraulic ram 35 extending from the support surface up into the space in the centre of the apparatus just described. A pump 37 as shown in figure 6 is driven via a belt drive 38 from pulleys 39 on the shaft 32 and upon opening of appropriate valve means a flow of water can be delivered by the pump into the cylinder 35 causing the apparatus to be raised from a lowered position where it is free from any bird suspended on the bird carrying shackles to a raised position where the birds are immersed in the scalding flow of water while still supported on the shackles.

The scalder 21 must be incorporated in control circuitry such that it cannot be raised until the carousel has been locked in position. Control equipment will also need to regulate the temperature of the water in the scalder and the time the scalder is held in the raised position with the birds immersed therein. After the appropriate time the scalder will once again be lowered to the position as shown in figure 1 of the drawings and the carousels may be advanced one further position.

The scalded birds are then advanced to the plucking station. With the preferred form of the apparatus the timing of the various operations is such that the plucking step is considerably shorter in time than the scalding step. For this reason a small rotary plucker 14 may be used but processing only part of the birds held on the carousel. The plucker may operate a number of sequences before the scalding station has completed its cycle of operation and this allows for a smaller plucker to operate effectively.

When the carousel advances to the plucking station it also engages with a driving head 39 powered by a motor to cause the carousel to be rotated in a controlled manner. A friction drive onto the periphery of the carousel rim will normally be sufficient. The scalded birds are preferably dropped from the shackles into the plucker by causing a cut-off saw 40 driven by a motor 41 to cut the birds' legs leaving the legs

5 **0 024 171** 6

supported in the shackles and dropping the body of the bird into the plucker. This type of apparatus is well known and is not detailed herein.

Control equipment can record the number of birds by counting protuberances extending from the shackles, for example one arm of the shackle can be connected to extend above the rim of the carousel and this can actuate for example a micro-switch thereby allowing the control equipment to record the number of birds which have been delivered into the plucker. When the required number of birds have been so delivered the drive 39 will stop and the plucker cycle commenced. The plucker cycle when finished will allow the door to the plucker to be opened discharging the birds which can then be placed onto an eviscerating line normally operated in association with this equipment (but not forming part of the present invention). Once the birds have been discharged this cycle would be repeated three or four times until the birds on the carousel have all been removed and at that time the sequencing may allow the carousels to be advanced through the next step.

As will be apparent from the foregoing the apparatus normally requires two operators. One operator will hang the birds and kill them, the other operator will load the eviscerating line with birds from the plucker and remove legs from the shackles prior to being delivered through the baffles 7 for the next cycle of operation.

## Claims

1. Poultry abattoir apparatus comprising a plurality of rotatably-supported arms each having a bird supporting means mounted thereon, characterised in that the bird supporting means on each arm (3) comprises a carousel (4) having a plurality of bird carrying shackles (5), the arms being rotatable between at least a killing station (9), a scalding station (12), and a plucking station (13), whereby two or more different operations can take place on different carousels simultaneously, and a plurality of birds can be simultaneously available for treatment at each station.

2. Apparatus as claimed in claim 1, wherein there are at least five arms (3) rotatable between a hanging station (8), a killing station (9), a bleeding station (11), a scalding station (12) and a plucking station (13).

3. Apparatus as claimed in claim 2, incorporating a baffle or wall means (7) dividing the hanging, killing and bleeding stations (8, 9 and 11) from the scalding and plucking stations (12 and 13).

4. Apparatus as claimed in claim 2 or claim 3, incorporating a drainage tray (10) to collect blood from the birds on the carousel located at the killing and bleeding stations (9 and 11).

5. Apparatus as claimed in any of the preceding claims, wherein there are six arms, with one carousel at any one time being located at a non-operating station (15).

6. Apparatus as claimed in any one of the preceding claims, wherein the arms are rotatably supported on a column or upstand (2).

7. Apparatus as claimed in any one of claims 1 to 5, wherein the arms (3) are rotatably supported by suspension from a hanger structure.

8. Apparatus as claimed in any one of the preceding claims wherein each carousel (4) incorporates between five and twenty, preferably between fifteen and twenty, equally spaced bird carrying shackles (5) about the periphery thereof.

9. Apparatus as claimed in any of the preceding claims wherein a supply of scalding water is raised at the scalding station (12) to immerse the birds suspended from the shackles (5) on the carousel (4).

10. Apparatus as claimed in claim 9, wherein the scalding station (12) comprises an annular open topped chamber (24) adapted to receive a plurality of birds located on said shackles of a carousel, a flow director (27) located between the inner edges of the annular chamber to divert a downwards flow of water onto the birds when in the chamber, water outflow means (31) at or adjacent the base of the chamber and water inlet means (28) directed on to the flow director, a pump (30) circulating the water through the water inlet means and flow director into the chamber to be drawn out through the water outlet means, heating means (34) to heat the water, and temperature control means to control the temperature of the water being circulated.

11. Apparatus as claimed in claim 10, including a hydraulic ram (35) to raise the annular chamber (24) of the scalder from a lowered position free from the birds supported on the carousel (4) to a raised position with the birds immersed in the annular chamber (24).

12. Apparatus as claimed in claim 10 or claim 11, wherein the ram (35) is mounted from a support surface to project upwardly into a central space surrounded by the annular scalding chamber (24).

13. Apparatus as claimed in any one of claims 10 to 12, wherein the water in the chamber (24) in use is kept at the required temperature by injection of live steam through pipes (34) located at or adjacent the base of the annular chamber.

14. Apparatus as claimed in any one of claims 10 to 13, wherein the flow director comprises a cowling (26) having an inverted cone section (27) located above the water inlet means (28) to operate to spread and guide the flow to direct the flow of water so that it is discharged into the annular chamber (24) in a downwards direction.

15. Apparatus as claimed in any one of claims 10 to 14, wherein the radial arms (3) carrying the carousel (4) can not be rotated when the annular chamber (24) is in the elevated position.

16. Apparatus as claimed in any one of the preceding claims, wherein plucking station (13) incorporates means to remove the scalded birds from the shackles for discharge into a plucker (14), said separation means comprising a cut-off saw (40) cutting through the legs of the suspended birds and allowing the remainder of the birds to fall into the plucker.

17. Apparatus as claimed in claim 16, wherein the carousel (4) at the plucking station (13) is rotated with a control mechanism limiting the degree of rotation and also controlling the operation of the cut-off saw (40) so that the required number of birds are discharged into the plucker and the plucking cycle is completed before further rotation of the carousel for treatment of any remaining birds.

18. Apparatus as claimed in any one of the preceding claims, wherein the carousels (4) are automatically advanced from one station to the next by a drive means (16) advancing in a step by step motion the carousels between the stations and with a lock mechanism (19) operating to lock the radial arms (3) in place when correctly located at the stations.

**Patentansprüche**

1. Vorrichtung zum Schlachten von Geflügel, enthaltend eine Vielzahl drehbar gehalterter Arme, an denen jeweils, eine Trageinrichtung für die Tiere angebracht ist, dadurch gekennzeichnet, daß die Trageinrichtung jedes Arms (3) ein Karussell (4) mit mehreren Fesseln (5) zum Halten und Tragen der Tiere aufweist und daß die Arme zwischen wenigstens einer Tötungsstation (9), einer Brühstation (12) und einer Rupfstation (13) drehbar sind, so daß zwei oder mehrere verschiedene Vorgänge auf verschiedenen Karussellen gleichzeitig ausführbar sind und eine Vielzahl von Tieren zur Behandlung bei jeder Station gleichzeitig zur Verfügung stehen.

2. Vorrichtung nach Anspruch 1, dadurch gekennzeichnet, daß wenigstens fünf Arme (3) vorgesehen sind, die zwischen einer Aufhängestation (8), einer Tötungsstation (9), einer Entblutungsstation (11), einer Brühstation (12) und einer Rupfstation (13) drehbar sind.

3. Vorrichtung nach Anspruch 2, gekennzeichnet durch eine Schutz- oder Zwischenwand (7), die die Aufhänge-, Tötungs- und Entblutungsstation (8, 9 und 11) von der Brüh- und Rupfstation (12 und 13) trennt.

4. Vorrichtung nach Anspruch 2 oder 3, gekennzeichnet durch eine Auffangwanne (10) zum Aufsammeln des Bluts der Tiere auf den bei der Tötungs- und Entblutungsstation (9 und 11) befindlichen Karussellen.

5. Vorrichtung nach einem der vorstehenden Ansprüche, dadurch gekennzeichnet, daß sechs Arme vorgesehen sind, so daß sich immer ein Karussell bei einer Nichtbearbeitungsstation (15) befindet.

6. Vorrichtung nach einem der vorstehenden Ansprüche, dadurch gekennzeichnet, daß die Arme auf einer Säule oder einem Ständer (2) drehbar gehaltert sind.

7. Vorrichtung nach einem der Ansprüche 1 bis 5, dadurch gekennzeichnet, daß die Arme (3) unter Aufhängung an einer Hängekonstruktion drehbar gehaltert sind.

8. Vorrichtung nach einem der vorstehenden Ansprüche, dadurch gekennzeichnet, daß jedes Karussell (4) zwischen fünf und zwanzig, vorzugsweise zwischen fünfzehn und zwanzig, gleichmäßig beabstandete Fesseln (5) zum Halten und Tragen der Tiere längs seines Umfangs aufweist.

9. Vorrichtung nach einem der vorstehenden Ansprüche, dadurch gekennzeichnet, daß ein Vorrat von Brühwasser bei der Brühstation (12) anhebbar ist, um von den Fesseln (5) auf dem Karussell (4) herabhängende Tiere in das Brühwasser einzutauchen.

10. Vorrichtung nach Anspruch 9, dadurch gekennzeichnet, daß die Brühstation (12) enthält: eine ringförmige, oben offene Kammer (24) zur Aufnahme einer Vielzahl an den Fesseln eines der Karusselle angebrachter Tiere, einen zwischen den Innenrändern der ringförmigen Kammer angeordneten Strömungsrichtungsgeber (27), der eine nach unten gerichtete Wasserströmung auf die in der Kammer befindlichen Tiere lenkt, eine Wasserausflußeinrichtung (31), die bei dem Boden der Kammer oder daran angrenzend vorgesehen ist, eine Wassereinlaßeinrichtung (28), die auf den Strömungsrichtungsgeber ausgerichtet ist, eine Pumpe (30), die das Wasser durch die Wassereinlaßeinrichtung und den Strömungsrichtungsgeber in die Kammer und von dort durch die Wasserausflußeinrichtung zirkulieren läßt, eine Heizeinrichtung (34) zum Erhitzen des Wassers und eine Temperatursteuer- oder -regeleinrichtung zum Steuern bzw. Regeln der Temperatur des umgewälzten Wassers.

11. Vorrichtung nach Anspruch 10, gekennzeichnet durch einen hydraulisch betätigbaren Kolgen (35) zum Anheben der ringförmigen Kammer (24) der Brühstation von einer abgesenkten Position, bei der die von dem Karussell (4) getragenen Tiere frei hängen, zu einer angehobenen Position, bei der die Tiere in die ringförmige Kammer (24) eingetaucht sind.

12. Vorrichtung nach Anspruch 10 oder 11, dadurch gekennzeichnet, daß der Kolben (35) auf einer Stützoberfläche derart angeordnet ist, daß er nach oben in einen von der ringförmigen Brühkammer (24) umgebenen mittigen Raum ragt.

13. Vorrichtung nach einem der Ansprüche 10 bis 12, dadurch gekennzeichnet, daß das in der Kammer (24) befindliche Wasser beim Gebrauch dadurch auf der erforderlichen Temperatur gehalten wird, daß Frischdampf über Rohre eingespritzt wird, die nahe beim Boden der ringförmigen Kammer oder angrenzend daran vorgesehen sind.

14. Vorrichtung nach einem der Ansprüche 10 bis 13, dadurch gekennzeichnet, daß der Strömungsrichtungsgeber eine Verkleidung (26) mit einem umgedrehten konusförmigen Abschnitt (27) aufweist, der oberhalb der Wassereinlaßeinrichtung (28) angeordnet ist und derart wirkt, daß das strömende Wasser in einer solchen Weise verteilt und geführt wird, daß es in Abwärtsrichtung in die ringförmige Kammer (24) fließt.

15. Vorrichtung nach einem der Ansprüche 10 bis 14, dadurch gekennzeichnet, daß die die Karuss<s/>elle tragenden radialen Arme (3) am Ausführen einer Drehbewegung gehindert sind, wenn sich die ringförmige Kammer (24) in der angehobenen Position befindet.

16. Vorrichtung nach einem der vorstehenden Ansprüche, dadurch gekennzeichnet, daß die Rupfstation (13) eine Einrichtung aufweist, die gie gebrühten Tiere von den Fesseln zur Eingabe der Tiere in eine Rupfeinrichtung (14) befreit und zu diesem Zweck mit einer Säge (40) ausgerüstet ist, die die Beine der aufgehängten Tiere durchtrennt und es auf diese Weise dem Restkörperteil der Tiere gestattet, in die Rupfeinrichtung zu fallen.

17. Vorrichtung nach Anspruch 16, dadurch gekennzeichnet, daß das Karussell (4) bei der Rupfstation (13) mit Hilfe eines Steuermechanismus gedreht wird, der das Ausmaß der Drehbewegung begrenzt und auch die Arbeitsweise der Säge (40) steuert, und zwar derart, daß die erforderliche Anzahl von Tieren in die Rupfeinrichtung gelangt und der Rupfzyklus beendet ist, bevor das Karussell zur Behandlung irgendwelcher restlicher Tiere weitergedreht wird.

18. Vorrichtung nach einem der vorstehenden Ansprüche, dadurch gekennzeichnet, daß die Karuss<s/>elle (4) mit Hilfe einer Antriebseinrichtung (16) automatisch von einer Station zur nächsten vorgeschoben werden, wobei die Antriebseinrichtung den Vorschub der Karuss<s/>elle zwischen den Stationen schrittweise ausführt, und daß ein Verriegelungsmechanismus (19) vorgesehen ist, der die radialen Arme (3) an ihrem Platz verriegelt, wenn sie bei den Stationen ihre richtige Lage einnehmen.

## Revendications

1. Appareil d'abattage de volaille comprenant une pluralité de bras à support rotatif sur chacun desquels est monté un moyen de support d'oiseau, caractérisé en ce que le moyen de support d'oiseau sur chaque bras (3) comprend un carrousel (4) ayant une pluralité de manilles porteuses d'oiseaux (5), les bras pouvant tourner entre au moins un poste de tuerie (9), un poste d'échaudage (12) et un poste de plumée (13), de telle sorte que des opérations différentes au nombre de deux ou plus puissent avoir lieu simultanément sur des carrousels différents et qu'une pluralité d'oiseaux puissent être simultanément disponibles pour traitement à chaque poste.

2. Appareil selon la revendication 1, dans lequel il y a au moins cinq bras (3) pouvant tourner entre un poste suspenseur (8), un poste de tuerie (9), un poste de saignée (11), un poste d'échaudage (12) et un poste de plumée (13).

3. Appareil selon la revendication 2, équipé d'une lame ou cloison (7) séparant les postes suspenseur, de tuerie et de saignée (8, 9 et 11) des postes d'échaudage et de plumée (12 et 13).

4. Appareil selon la revendication 2 ou 3, équipé d'un plateau de drainage (10) pour recueillir le sang des oiseaux sur le carrousel, situé aux postes de tuerie et de saignée (9 et 11).

5. Appareil selon l'une quelconque des revendications précédentes, dans lequel il y a six bras, avec un carrousel à un moment quelconque étant situé à un poste hors service (15).

6. Appareil selon l'une quelconque des revendications précédentes, dans lequel les bras sont montés à rotation sur une colonne ou montant (2).

7. Appareil selon l'une quelconque des revendications 1 à 5, dans lequel les bras (3) sont montés à rotation par suspension depuis une potence.

8. Appareil selon l'une quelconque des revendications précédentes, dans lequel chaque carrousel (4) comprend entre cinq et vingt — de préférence entre quinze et vingt — manilles porteuses d'oiseaux équidistantes (5) à sa périphérie.

9. Appareil selon l'une quelconque des revendications précédentes, dans lequel une alimentation d'eau d'échaudage est pompée au poste d'échaudage (12) pour immerger les oiseaux suspendus aux manilles (5) sur le carrousel (4).

10. Appareil selon la revendication 9, dans lequel le poste d'échaudage (12) comprend une chambre annulaire ouverte vers le haut (24) destinée à recevoir une pluralité d'oiseaux situés sur lesdites manilles d'un carrousel, un directeur d'écoulement (27) situé entre les bords internes de la chambre annulaire pour dévier un flux tombant d'eau vers les oiseaux lorsqu'ils sont dans la chambre, une sortie d'eau (31) à la base de la chambre ou à proximité et une arrivée d'eau (28) orientée vers le directeur d'écoulement, une pompe (30) faisant circuler l'eau à travers l'arrivée d'eau et le directeur d'écoulement dans la chambre pour être évacuée par la sortie d'eau, des moyens de chauffage (34) pour chauffer l'eau, et des moyens de commande de température pour commander la température de l'eau en circulation.

11. Appareil selon la revendication 10, comprenant un vérin hydraulique (35) pour soulever la chambre annulaire (24) de l'échauder depuis une position abaissée dégagée des oiseaux suportés sur le carrousel (4) jusqu'à une position élevée avec les oiseaux immergés dans la chambre annulaire (24).

12. Appareil selon la revendication 10 ou 11, dans lequel le vérin (35) est monté depuis une surface de support pour faire saillie vers le haut dans l'espace central qu'entoure la chambre annulaire d'échaudage (24).

13. Appareil selon l'une quelconque des revendications 10 à 12, dans lequel l'eau dans la chambre (24) en service est maintenue à la température requise par injection de vapeur vive à travers des tuyaux (34) situés à la base de la chambre annulaire ou à proximité.

14. Appareil selon l'une quelconque des revendications 10 à 13, dans lequel le directeur d'écoulement comprend un capot (26) présentant une section en cône inversé (27) située au dessus de l'entrée d'eau (28) pour servir à répandre et à guider l'écoulement d'eau afin de le diriger pour qu'il soit refoulé dans la chambre annulaire (24) en une direction vers le bas.

15. Appareil selon l'une quelconque des revendications 10 à 14, dans lequel les bras radiaux (3) portant le carrousel (4) ne peuvent être mis en rotation lorsque la chambre annulaire (24) est en position élevée.

16. Appareil selon l'une quelconque des revendications précédentes, dans lequel le poste de plumée (13) comporte des moyens pour retirer les oiseaux échaudés des manilles pour décharge dans un plumeur (14), ledit moyen de séparation comprenant une scie de découpage (40) coupant les pattes des oiseaux suspendus et permettant au reste des oiseaux de tomber dans le plumeur.

17. Appareil selon la revendication 16, dans lequel le carrousel (4) au poste de plumée (13) est mis en rotation avec un mécanisme de commande limitant le degré de rotation et commandant également la mise en oeuvre de la scie de découpage (40) de telle sorte que le nombre requis d'oiseaux soient déchargés dans le plumeur et que le cycle de plumée soit achevé avant que ne tourne plus loin le carrousel pour le traitement de tous oiseaux restants.

18. Appareil selon l'une quelconque des revendications précédentes, dans lequel les carrousels (4) sont automatiquement avancés d'un poste au suivant par un moyen moteur (16) faisant avancer pas à pas les carrousels entre les postes, avec un mécanisme de verrouillage (19) fonctionnant pour verrouiller les bras radiaux (3) en position correcte aux postes.

FIG. 1

0024171

FIG 2

FIG. 3

FIG. 4

FIG.5.

FIG. 6

0024 171